# EUROPÄISCHE PATENTSCHRIFT

(11) **EP 1 790 231 B1**
(45) Veröffentlichungstag und Bekanntmachung des Hinweises auf die Patenterteilung: **11.05.2011**
(21) Anmeldenummer: 05781064.0
(22) Anmeldetag: 08.08.2005
(51) Int. Cl.: A23C 9/12, A23C 9/13, A23C 3/02, A23C 9/00, A23C 3/07, A23C 9/152, A01J 11/00

(54) **VERFAHREN ZUR HERSTELLUNG VON SAUERMILCHPRODUKTEN, VERFAHREN ZUR VERARBEITUNG DER MILCH DAFÜR, SAUERMILCHPRODUKTLINIE, VORRICHTUNG ZUR VERARBEITUNG DER MILCH FÜR BESAGTE LINIE**
METHOD FOR PRODUCING SOUR MILK PRODUCTS, METHOD FOR TREATING MILK THEREFOR, SOUR MILK PRODUCTION LINE, DEVICE FOR TREATING MILK FOR SAID LINE
PROCEDE DE FABRICATION DE PRODUITS A BASE DE LAIT ACIDULE, PROCEDE CORRESPONDANT DE TRAITEMENT DE LAIT, CHAINE DE FABRICATION DE PRODUITS A BASE DE LAIT ACIDULE ET DISPOSITIF DE TRAITEMENT DE LAIT DESTINE A CETTE CHAINE

(30) Priorität: 17.08.2004 RU 2004125189
(43) Veröffentlichungstag der Anmeldung: 30.05.2007
(73) Patentinhaber: Marchenko, Viktor Vasilievich, Vladivostok 690062 (RU); Sotnikov, Valery Alexandrovich, Kazan, 420140 (RU)
(72) Erfinder: MARCHENKO, Viktor Vasilievich, Vladivostok, 690062 (RU); SOTNIKOV, Valery Alexandrovich, Kazan, 420140 (RU)
(74) Vertreter: Jeck, Anton
(86) Internationale Anmeldenummer: PCT/RU2005/000405
(87) Internationale Veröffentlichungsnummer: WO 2006/025761

(56) Entgegenhaltungen:
- WO-A1-01/72135
- WO-A1-2004/028260
- WO-A2-00/72691
- GB-A- 1 273 943
- RU-A- 2001 107 486
- RU-C1- 2 130 727
- RU-C1- 2 222 952
- RU-C2- 2 202 606
- US-A- 2 311 599
- GLANDORF K ET AL: "THE BEHAVIOR OF POLY PHOSPHATES DURING PRODUCTION AND STORAGE OF LONG KEEPING MILK PRODUCTS" ZEITSCHRIFT FUER LEBENSMITTEL-UNTERSUCHUNG UND -FORSCHUNG, Bd. 163, Nr. 3, 1977, Seiten 178-182, XP002583287 ISSN: 0044-3026
- BREDIKHIN S.A. ET AL.: 'Tekhnologiya i tekhnika pererabtki moloka' KOLOS 2003, pages 272 - 275

## Beschreibung

Die hier beschriebene Erfindung betrifft das Gebiet der Milchindustrie und kann zur Produktion von pasteurisierter Vollmilch oder von wiederaufgebauter Milch und Sauermilchprodukten mit langer Lagerungszeit und mit verbesserten, sinnlich wahrnehmbaren (organoleptischen) Kennwerten verwendet werden.

Bisher war das Reservoirverfahren zur Erzeugung von Sauermilchprodukten bekannt. Dabei wird die behandelte Milch in speziellen Behältern gesäuert, in denen die Produktreifung erfolgt. Danach wird das Produkt in die Verpackung abgefüllt (s. Bredikhin, A.S., Kosmodemjanskij J.W., Jurin W.N., Technologie und Technik der Milchbehandlung, Moskau, Kolos, 2001, 399 Seiten, S. 272 [1]). Der Nachteil des Reservoirverfahrens bei der Erzeugung der Sauermilchprodukte ist der hohe Grad der Verseuchung der Produkte durch die Mikroflora infolge der nicht vollständigen Beseitigung dieser Mikroflora im Laufe des Pasteurisierungsprozesses, der Keimung der nach der Pasteurisierung übrig gebliebenen Sporen, der Verseuchung der Produkte durch die Mikroflora während der Säureweckergabe, der Säuerung, der Kühlung, der Reifung und der nichtaseptischen bzw. halbaseptischen Abfüllung in die nichtaseptische oder halbaseptische Verpackung. Die Sauermilchprodukte, insbesondere Kefir, der beim Reservoirverfahren produziert wird, weisen infolge der Fremdkeime-Entwicklung in der Fertigware und der unzureichenden Löslichkeit des Milcheiweißes verschlechterte, organoleptische Eigenschaften auf, und zwar einen niedrigen Viskositätsgrad des Produkts und eine artfremde Struktur und Konsistenz des Produkts, wobei die Lagerungszeit maximal 24 Stunden beträgt.

Ein weiterer, bekannter, technologischer Prozess zur Erzeugung von Sauermilchprodukten, insbesondere Kefir, ist das Thermostatverfahren; es besteht aus folgenden Vorgängen: eine Rohmilchvorbereitung, eine Milchbehandlung mittels Pasteurisierung und Homogenisierung, ein Milchansäuern mittels direkter Säureweckergabe unter Durchmischen, eine Abfüllung und Packung, Säuerung, Kühlung und Reifung (s. Bredichin A. S., Kosmodemjanskij J. W., Jurin W. N., Technologie und Technik der Milchbehandlung, Moskau, Kolos, 2001, 399 Seiten, S. 275, [1]). Die behandelte, pasteurisierte und gekühlte Milch wird in Behältern und Bädern zum Stocken gebracht, durchmischt und anschließend schubweise zur Abfüllung unter ständigem Durchmischen weitergeleitet. Die dickgelegte Milch wird in der Verpackung in die Brutkammer zur Säuerung innerhalb von 8-12 Stunden bei einer Temperatur von 17-25° C je nach Jahreszeit gefördert. Nach der Säuerung weist der Kefir ein festes Milchsäuregerinnsel mit einem Säuregehalt von 75-80 % auf. Der gesäuerte Kefir wird in eine Kühlkammer zum Kühlen bis auf 8° C und zur Reifung bei dieser Temperatur im Laufe von mindestens 12 Stunden gebracht. Der beschriebene Prozess zur Erzeugung von Sauermilchprodukten ist das am nächsten liegende Vergleichsverfahren, bei dem die oben beschriebenen Nachteile des Reservoirverfahrens teilweise beseitigt sind. Jedoch besitzen die Produkte, die mit dem Thermostatverfahren erzeugt werden, immer noch eine unzureichende Lagerungszeit von 24 Stunden bei einer Temperatur von 8° C; dieser Nachteil ist auch durch das Vorhandensein von einer großen Anzahl von sporenbildenden Organismen im Produktmedium sowohl in der vegetativen Form als auch in der Sporenform zu erklären. Dies geschieht infolge der nicht ausreichend wirksamen Durchführung der Milchsterilisierung, aufgrund der dieses Gärungsmilchprodukt erzeugt wird, und auch infolge der sekundären Milchkeimung, die bei der Aufbewahrung der pasteurisierten Milch in Gefäßen, bei ihrem Versand durch technologische Verbindungswege, bei der Verpackung der Endprodukte sowohl unter aseptischen als auch halbaseptischen Bedingungen unvermeidlich ist. Die Sauermilchprodukte, insbesondere Kefir, weisen immerhin infolge der unvermeidlichen Verzerrung des Kalzium- und Phosphorausgleichs von Rohmilch wegen ihrer Pasteurisierung und auch infolge der Löslichkeitssenkung des denaturierten Milcheiweißes, besonders in der wiederaufgebauten Milch, keine hohen, organoleptische Eigenschaften auf.

Bekannt ist ein Verfahren zur Erzeugung von pasteurisierter Milch, bei dem deren Normalisierung, Homogenisierung, Pasteurisierung, Kühlung und Abfüllung eingeschlossen ist. Aufgrund dieses Verfahrens werden Konsummilch und Sauermilchprodukte erzeugt. Dabei wird Milch zweimal mittels einer Kühlung bis zu 2-6° C zwischen zwei Erhitzungsphasen pasteurisiert (s. das russische Patent 2166855, Verfahren zur Erzeugung von pasteurisierter Milch [Varianten], MPK7 A23C9/00, veröffentlicht am 20.05.2001, [2]). Um die Lagerungszeiten noch weiter zu verlängern, wird die Milch nach einer Normalisierung und Vorwärmung baktofugiert. Die Nachteile sind eine unzureichende Lagerungszeit der Milch, wobei die Lagerungszeit auf 5 Tage beschränkt ist, und geringe, organoleptische Kennwerte dieser pasteurisierten Milch mit einem Erhitzungsbeigeschmack, die zum zweiten Mal bei hohen Temperaturen von etwa 70-85°C pasteurisiert worden ist. Dieselben Nachteile werden auch beim Gärungsmilchprodukt bemerkt, das aufgrund dieser Milch erzeugt worden ist.

Das am nächsten liegende Verfahren zur Milchbehandlung ist das Verfahren gemäß dem russischen Patent 2222952, Verfahren zur Erzeugung von Konsummilch und Fertigungsstraße für die Erzeugung dieser Konsummilch, MPK7 A23C 9/00, 3/00, A01J11/00, veröffentlicht am 10.02.2004, Bulletin Nr. 4 [3]. Dieses Verfahren zur Milchbehandlung besteht darin, dass Milch von Fremdstoffen gereinigt und anschließend kurzzeitig mittels Infrarotstrahler vorgewärmt wird. Die Baktofugierung wird vorgenommen, um die Milch von einer inaktivierten Mikroflora zu reinigen. Ein kombinierter Prozess der Dispergierung (Homogenisierung) und Pasteurisierung findet mit Hilfe eines mehrstufigen, pulsfähigen Rotorapparats statt, in dem akustische Schwingungen zur Milcherhitzung zusätzlich erzeugt werden. Die Dispergierung (Homogenisierung) wird mittels mehrmaligen Umlaufs einzelner Milchportionen bei einer Temperatur von 68-72° C mit nichtgeregelter Homogenisierungsqualität der Fettkügelchen sichergestellt. Jedes Fettkügelchen hat einen weiten Größenbereich von 0,5-1,1 mkm. Bei der Dispergierung ist es möglich, diese Betriebsart bei erhöhtem Milchsäuregehalt, d.h. bei einem hohen Grad der Milchkeimung, zu wiederholen. Die Abfüllung der Milch erfolgt nach deren Kühlung bis auf 4-6° C.

Der Nachteil dieses Verfahrens ist die Erzeugung von Milch sowie Milchprodukten mit unzureichend langer und stabiler Lagerungszeit. Die Ursachen dafür sind eine ungenügende Entkeimung der Milch- bzw. Mikroflora, eine wiederholte Verseuchung der Milch durch die Mikroflora in Rohrleitungen und Sammelbehältern nach der Dispergierung und Pasteurisierung und vor der Abfüllung, sowie eine niedrige, thermische Milchstabilität.

Bekannt ist eine Fertigungsstraße zur Erzeugung von Sauermilchprodukten auf der Grundlage des Thermostatverfahrens, das das nächste, bekannte Verfahren zur Erzeugung von Sauermilchprodukten darstellt (s Bredichin, A.S., Kosmodemjanskij, J.W., Jurin, W.N., Technologie und Technik der Milchbehandlung, Moskau, Kolos, 2001, 399 Seiten, S. 272, 273 [1]). Die Fertigungsstraße enthält zur Milchbehandlung eine Einrichtung, die mit einer Pasteurisierungsanlage, einem Homogenisator und einem Heißhalter ausgerüstet ist, ferner eine Einrichtung zur Säureweckergabe, einen Abfüllautomat, eine Brutkammer und eine Kühlkammer, die alle in der Reihenfolge des technologischen Arbeitsablauf aufgestellt sind. Diese Straße stellt das der Erfindung am nächsten liegende Vergleichssystem dar. Der Nachteil der bekannten Straße ist eine unzureichende Lagerungszeit der auf dieser Fertigungsstraße erzeugten Sauermilchprodukte, und zwar 24 Stunden bei einer Temperatur von 8° C; dies ist durch das Vorhandensein einer großen Anzahl sporenbildender Organismen im Medium dieser Produkte sowohl in der vegetativen Form als auch in der Sporenform zu erklären. Es geschieht infolge der nicht ausreichend wirksamen Milchsterilisierung, die die Grundlage zur Herstellung des Gärungsmilchprodukts ist, und infolge der sekundären Keimung der Milch und Sauermilchprodukte in den Aufbewahrungsgefäßen, beim Versand der Produkte auf technologischen Verbindungswegen und bei der Verpackung der Endprodukte sowohl unter aseptischen als auch halbaseptischen Bedingungen.

Die am nächsten kommende Erfindung in Bezug auf die Einrichtung zur Milchbehandlung ist die Fertigungsstraße zur Milchherstellung gemäß dem russischen Patent 2222952, Verfahren und Fertigungsstraße zur Erzeugung von Konsummilch, MPK7 A23C 9/00;3/00, A01J11/00, veröffentlicht am 10.02.2004, Bulletin Nr. 4 [3]. Diese Fertigungsstraße enthält einen Ausgangsmilchbottich, einen Kälteaustauscher, der mit einem Infrarotstrahler ausgerüstet ist, eine Entkeimungszentrifuge, einen mehrstufigen, pulsfähigen Rotorapparat mit einem Zwischenbehälter zur Dispergierung und Pasteurisierung, eine Kühleinrichtung und eine Abfülleinrichtung. Alle diese Einrichtungen sind in der Reihenfolge des Prozessablaufs installiert und miteinander durch ein Rohrleitungssystem verbunden. Der Ausgang des mehrstufigen, pulsfähigen Rotorapparats ist mit dem Eingang des Zwischenbehälters verbunden, während der Ausgang des Zwischenbehälters mit dem Eingang des mehrstufigen, pulsfähigen Rotorapparats (PRA) verbunden ist. Dabei wird durch den PRA ein geschlossener Kreis für einen mehrmaligen Milchkreislauf gebildet. Der PRA ist mit einem Temperaturregler zur Milcherhitzung ausgerüstet, der elektrisch mit einem Stellgerät in Form eines Antriebs eines Dreiwegeventil-Verteilungsschiebers zur Temperaturkontrolle der Milchbehandlung im PRA verbunden ist.

Der Nachteil der Einrichtung ist die Erzeugung von Milch mit nicht ausreichend langer und stabiler Lagerungszeit, niedriger thermischer Stabilität und viel zu geringen, organoleptischen Eigenschaften. Dies verursacht eine niedrige Qualität der Produkte, die auf der Basis dieser Milch hergestellt werden.

Die Aufgabe der Erfindung ist die Erzeugung von Sauermilchprodukten, die Milchbehandlung für diese Sauermilchprodukte mit langer Lagerungszeit, hoher thermischer Stabilität, verbesserten organoleptischen Eigenschaften durch eine sorgfältigere Milchentkeimung und die Ausschließung der sekundären Keimung der Produkte im Prozess der Produkterzeugung in allen Produktionsstufen.

Diese Aufgabe wird durch das Verfahren zur Erzeugung der Sauermilchprodukte gelöst, das das Vorbereiten der Rohmilch, die Milchbehandlung mit der Pasteurisierung und Homogenisierung, das Milchansäuern mit dem Verfahren der direkten Säureweckergabe und des Durchmischens, wenn es notwendig ist, die Abfüllung und die Verpackung mit einem Abdichten, die Säuerung im Thermostat, die Kühlung und die Reifung einschließt. Der Unterschied zum Prototyp besteht darin, dass der Milchbehandlungsprozess und die nachfolgenden Vorgänge der Herstellung der Sauermilchprodukte unter Einwirkung des in der Milch (im Milchplasma) vorhandenen und gelösten Polyphosphorsäurederivats (im Weiteren PPSD genannt) in Übereinstimmung mit der folgenden, allgemeinen Formel durchgeführt werden:

HO-[PO₃X]ₙ-PO₃X₂.

Dabei gilt: X sind Ionen des Natriums, Kaliums, Kalziums, Magnesiums, Wasserstoffs oder des Ammoniums; 30 ≥ n ≥ 1; die Formel hat den Zählwert 0,4-0,7 g/l.

Die Milchbehandlung erfolgt mittels einer zweifachen Pasteurisierung; die Abfüllung und die Verpackung mit der Abdichtung werden bei der Temperatur von 68-72° C bis zur zweiten Pasteurisierung vorgenommen. Die Säureweckergabe wird in die hermetisch verpackte Milch nach der zweiten Pasteurisierung bei Enthermetisierung der Verpackung und unter einer UV-Bestrahlung der Zone der Säureweckergabe mit nachfolgender endgültiger Abdichtung der Verpackung im Werk vorgenommen, und die Durchmischung wird wenn nötig durch Schütteln des verschlossenen Produkts sichergestellt. Das Verfahren der Sauermilchprodukt-Erzeugung kann durch den Vorgang des warmen Milchschwelkens oder einer Zugabe von pasteurisierten Stückchen von Obst, Gemüse, Beeren und anderen Füllmassen (Einweiß vegetabiler und milchhaltiger Herkunft, Zucker, würzige Geschmackszutaten, Fruchtsäfte, Marmelade, Konfitüre, u.a.m.) in Milch nach deren erster Pasteurisierung ergänzt werden, wobei die Temperatur für Milch und Sauermilchprodukte 68-72° C beträgt. Für geschwelkte Milch und Sauermilchprodukte werden die Vorgänge bei der Temperatur des warmen Schwelkens durchgeführt.

Die Aufgabe wird auch durch ein Verfahren der Milchbehandlung gelöst, das die Entfernung von Fremdstoffen aus der Milch, eine Milchvorwärmung und einen angegliederten Prozess der Dispergierung (Homogenisierung) und Pasteurisierung mit nochmaliger Pasteurisierung einschließt. Die Dispergierung (Homogenisierung) wird in der Betriebsart des mehrmaligen Umlaufs der einzelnen Milchportionen bei der Temperatur der Pasteurisierung mit nachfolgender Abfüllung und Abdichtung durchgeführt. Der Unterschied des Verfahrens zur Milchbehandlung gemäß der vorliegenden Erfindung ist die Durchführung der Milchbehandlung beim Vorhandensein des in der Milch (im Milchplasma) gelösten Polyphosphorsäurederivats (PPSD) der allgemeinen Formel:

HO-[PO₃X]ₙ-PO₃X₂,

wobei gilt: X sind Ionen des Natriums, Kaliums, Kalziums, Magnesiums, Wasserstoffs oder des Ammoniums; 30 ≥ n ≥ 1; die Formel hat den Zählwert 0,4-0,7 g/l.

Der Prozess der Dispergierung (Homogenisierung) erfolgt solange, bis die Größe der Fettkügelchen maximal 0,5 mkm erreicht. Nach der ersten Pasteurisierung wird die pasteurisierte Konsummilch auf einer Temperatur von 68-72° C mindestens 15 Minuten und Sauermilchprodukte mindestens 5 Minuten gehalten. Die Abfüllung mit der Abdichtung wird nach dem Halten bei der Haltetemperatur in hermetischen Verpackungen vorgenommen. Danach erfolgen die Kühlung der hermetisch verschlossenen, heißen Milch bis auf 12-37° C und die Haltung bei dieser Temperatur mindestens 30 Minuten lang. Die zweite Pasteurisierung erfolgt nach dieser Haltung bei einer Temperatur von 68-72° C mit einer Geschwindigkeit von mindestens 10° C/s mittels eines UHF-Strahlers.

Die Aufgabe wird auch mit der Konstruktion einer Fertigungsstraße für Sauermilchprodukte gelöst, wobei die Fertigungsstraße eine Einrichtung zur Milchbehandlung mit einer Homogenisiervorrichtung und einer Pasteurisierungsanlage, eine Einrichtung zur direkten Säureweckergabe, einen Abfüllautomat (Abfülleinrichtung) mit einer Vorrichtung zum hermetischen Verschließen, eine Brutkammer und eine Kühlkammer umfasst, wobei alle diese Einrichtungen hintereinander durch die Fördereinrichtung während der Erfüllung der technologischen Vorgänge verbunden sind. Der Unterschied dieser Fertigungsstraße für Sauermilchprodukte gegenüber dem Prototyp besteht in der Anordnung der Abfülleinrichtung vor der Säureweckergabe-Einrichtung, die Ausführung der Fördereinrichtung nach der Abfülleinrichtung nicht als Rohrleitung, sondern in Form eines Förderbands bzw. eines hydrodynamischen Fördertunnels. Die Einrichtung der direkten Säureweckergabe ist zusätzlich mit einer Enthermetisierungsanlage, die in Form einer Abnahmevorrichtung zur Abnahme einer hermetischen Folie von der Milchverpackung angefertigt werden kann, mit einer für die Verpackung vorgesehenen Endabdichtungsanlage, die nach der Einrichtung zur Säureweckergabe angeordnet werden kann, und mit UV-Strahlem ausgerüstet, die auf dem Kreisumgang (die Grenze entlang) der Säureweckergabe-Zone und der Zone der endgültigen Hermetisierung der Verpackung installiert sind. Eine Rührvorrichtung der abgefüllten und in Milchblöcke mit Säureerreger gesammelten Milch ist als Förderbandschüttelgerät ausgeführt, das zwischen der Säureweckergabe-Einrichtung und der Brutkammer installiert ist.

Die Aufgabe wird auch mittels einer Milchbehandlungseinrichtung gelöst, die eine Ausgangsmilchvorlage, eine Pumpe, einen Kälteaustauscher, einen Rezirkulationsbehälter zur Dispergierung (Homogenisierung) und Pasteurisierung, eine Dispergiervorrichtung (Homogenisiervorrichtung), eine Kühlvorrichtung (Kühlkammer) und eine Abfülleinrichtung umfasst, wobei alle diese Vorrichtungen in Übereinstimmung mit dem Ablauf von technologischen Vorgängen angeordnet und miteinander durch Rohrleitungen verbunden sind. Der Ausgang der Dispergiervorrichtung (Homogenisiervorrichtung) ist mit dem Eingang des Rezirkulationsbehälters durch ein Dreiwegeventil verbunden, während der Ausgang des Rezirkulationsbehälters mit dem Eingang der Dispergiervorrichtung (Homogenisiervorrichtung), verbunden ist. Dabei wird ein geschlossener Kreis für einen mehrmaligen Milchumlauf über die Dispergiervorrichtung (Homogenisiervorrichtung) gebildet. Die Dispergiervorrichtung (Homogenisiervorrichtung) weist einen Temperaturregler zur Milcherhitzung auf, der elektrisch mit einem Stellgerät in Form eines Antriebs eines Dreiwegeventil-Verteilungsschiebers verbunden ist. Der Unterschied der Konstruktion gemäß der vorliegenden Erfindung zum Prototyp besteht im Vorhandensein eines Zusatzbehälters (weiter der Behälter des Polyphosphorsäurederivats) zum Vorbereiten einer Wasserlösung bzw. Suspension des Polyphosphorsäurederivats, wobei dieser Behälter mit dem Eingang der Dispergiervorrichtung (Homogenisiervorrichtung) verbunden ist. Ein weiterer Unterschied besteht im Vorhandensein des Standbehälters (Halters) zur Milchablagerung bei einer Temperatur von 68-72° C. Dieser Behälter ist mit einem Wassermantel ausgerüstet, der die Temperatur von 68-72° C hält, und sein Eingang ist mit dem Ausgang der Dispergiervorrichtung (Homogenisiervorrichtung) verbunden. Der Ausgang des Behälters ist mit der Abfülleinrichtung verbunden, die neben dem Standbehälter installiert ist. Der Standbehälter kann als Durchmischungs- oder Verdrängungsapparat mit einem Wassermantel gebildet werden, der die Temperatur von 68-72° C hält. Die Temperaturhaltung wird durch den Anschluss des Wassermantels an eine Kühlmittelsströmung (Wasser, Dampf, Milch) sichergestellt. Die Milchbehandlungseinrichtung ist auch durch eine Kühlvorrichtung ergänzt, die nach der Abfülleinrichtung installiert ist. Die Kühlvorrichtung kann in Form eines hydrodynamischen, durchgängigen Kühlfördertunnels ausgeführt werden, der mit einem zweiten Behälter, dem Milchhalter, bei einer Temperatur von 12-37° C ausgerüstet ist. Die Milchbehandlungseinrichtung ist zusätzlich mit einem Tunnelapparat für eine sekundäre Pasteurisierung mit einem Förderband ausgerüstet, der mit UHF-Strahlern ausgestattet ist, die längs des Förderbands installiert sind. Die UHF-Strahler stellen die Milchtemperaturanstiegrate von mindestens 10° C/s bis zu der Temperatur von 68-72° C sicher, die von der Leistung der UHF-Strahler abhängt.

### Beschreibung des Ausführungsbeispiels

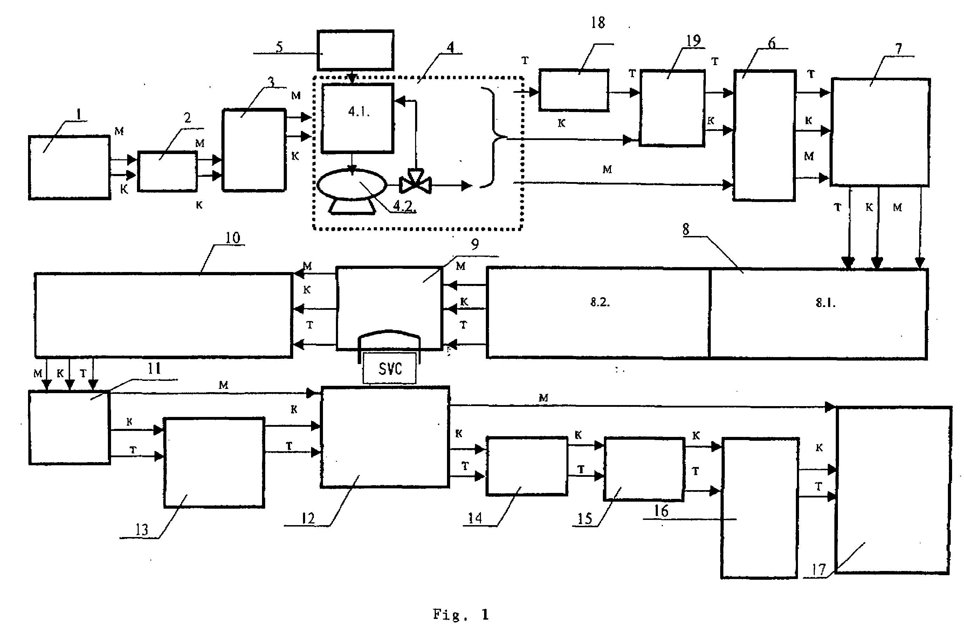

Die Erfindung wird nun anhand eines Ausführungsbeispiels näher erläutert. Die beigefügte Figur zeigt ein Blockschaltbild einer Fertigungsstraße für Sauermilchprodukte mit einer Einrichtung zur Milchbehandlung, die eine lange Lagerungszeit ermöglicht und gute organoleptische Eigenschaften aufweist. Die anliegende Tabelle listet die Erzeugnisse der Milchbehandlung, die Sauermilchprodukte und die Kennwerte für die pasteurisierte Konsummilch und die Sauermilchprodukte unter unterschiedlichen Betriebsarten ihrer Erzeugung auf.

Die Fertigungsstraße besteht aus einer Ausgangsmilchvorlage, nämlich einem Sammelbehälter 1, einer Pumpe 2, einem Kälteaustauscher 3, einem Dispergierungs- (Homogenisierungs-) und Pasteurisierungssystem 4, das einen Rezirkulationsbehälter 4.1 zur Dispergierung (Homogenisierung) und Pasteurisierung, eine Dispergenspumpe oder einen pulsfähigen Rotorapparat 4.2 (weiter PRA), ein Rohrleitungssystem und eine Ventilverschlussgarnitur (sind alle durch ein gepunktetes Kästchen eingerahmt). Sie sind alle in Reihe verbunden. Der Ausgang des Rezirkulationsbehälters 4.1 ist mit dem Eingang des pulsfähigen Rotorapparats 4.2 verbunden, während der Ausgang des pulsfähigen Rotorapparats 4.2 mit dem Eingang des Rezirkulationsbehälters 4.1 durch die Ventilverschlussgarnitur verbunden ist. Die Dispergenspumpe 4.2 kann in Form einer Dispergiervorrichtung, einer kolloidalen Mühle, eines Injektormischers, einer Spritzdüse, einer Dispergenspumpe (s. Neues polytechnisches Wörterbuch, Wissenschaftlicher Verlag "Großes Russisches Lexikon", 2000, S. 118, 145), eines pulsfähigen Rotorapparats (s. Patent der russischen Föderation 2166986, Wirkungsbeginn 11. Mai 1999) oder einer ähnlichen Vorrichtung gebildet werden. Der pulsfähige Rotorapparat (S-Emulgiervorrichtung), Modell TT 520.00, Hersteller geschlossene Aktiengesellschaft "Industrietechnologien", Russland, die Dispergenspumpe, Modell RPA-25 (55,55A)-K, Hersteller Firma ENA, Russland, und die Plungerdispergiervorrichtung, Modell A1-OGM-2,5, Russland, können als Dispergiervorrichtung verwendet werden. Wenn es notwendig ist, kann die Plungerdispergiervorrichtung mit einer zusätzlichen Heizvorrichtung ausgerüstet werden, um die nötige Temperatur aufrecht zu halten. Die Rezirkulationsbetriebsart ist aufgrund des Rückführkreises möglich, wenn die Milchportion vom Ausgang der Dispergiervorrichtung auf deren Eingang durch den Rezirkulationsbehälter gegeben wird. Das Dispergierungs- und Pasteurisierungssystem 4 ist mit einem Behälter 5 für das Vorbereiten der Lösung des Polyphosphorsäurederivats (weiter "Behälter für das Polyphosphorsäurederivat" genannt) ausgerüstet, wobei der Behälter 5 in Form eines Behälters mit dem Mischer oder ohne diesen Mischer gebildet werden kann. Die Fertigungsstraße umfasst ferner einen Standbehälter 6, der als Kammer in Form eines Rohrs ausgeführt werden kann. Dadurch wird Milch in einem unterbrochenen Strom unter isothermischen Bedingungen abgegeben. Die Kammer kann in Form eines Rohrs, eines walzenförmigen Behälters mit einem Wassermantel, einer Rohrschlange und anderer Körper gebildet werden. Die Fertigungsstraße enthält weiterhin eine Abfülleinrichtung 7 mit einem hermetischen Vorverschluss, einen Einheitsapparat 8 in Form eines hydrodynamischen Tunnels, der einen Abschnitt 8.1 zur konvektiven Kühlung bis auf eine Temperatur von 12-37° C und einen Ablagerungsabschnitt 8.2 zur Lagerung bei einer Temperatur von 12-37° C einschließt, einen Tunnelapparat 9 zur sekundären Pasteurisierung, einen hydrodynamischen Kühltunnel 10 oder eine andere Kühleinrichtung, beispielsweise den Bewässerungstyp aus [1], S. 70, einen Trockenapparat 11, einen Verschluss- und Etikettierungsapparat 12, einen Apparat 13 zur direkten Säureweckergabe, einen Blockverpackungsapparat 14, ein Förderbandschüttelgerät 15, eine Brutkammer 16 und eine Kühlkammer 17. Die Fertigungsstraße kann durch einen Verschnittbehälter 18 ergänzt werden, der zwischen dem Ausgang des Dispergierungs- und Pasteurisierungssystems 4 und dem Eingang des Standbehälters 6 eingebaut ist.

Die Fertigungsstraße ist auch durch einen Kälteaustauscher 19 für Sauermilchprodukte, geschwelkte Milch und Geschmackszutaten ergänzt, der zwischen dem Dispergierungs- und Pasteurisierungssystem 4 und dem Eingang des Standbehälters 6 eingebaut ist. Die Abfülleinrichtung 7 kann als die in [1] beschriebene Abfüllmaschine (Seiten 190-195) ausgeführt werden, die für das Abpacken in Plastikflaschen verwendet wird. Der Tunnelapparat 9 für die sekundäre Pasteurisierung ist ein isolierter Kanal mit einem Förderband, das sich innerhalb und längs dieses Kanals bewegt und auf dem Flaschen mit Milch aufgestellt sind. Den Lauf des Förderbands entlang sind UHF-Strahler aufgebaut. Die Konstruktion des Apparats für die direkte Säureweckergabe hängt von der Form des Säureerregers ab und kann das Ausspritzen, die Zugabe des Säureerregers in Pillenform und anderen Formen sicherstellen. Die Transfereinrichtungen sind symbolisch mit Pfeilen bezeichnet. Die Einrichtungen für die Rohstoffzugabe von Konsummilch sind mit dem Buchstaben M, für das Gärungsmilchprodukt mit dem Buchstaben K und für das Gärungsmilchprodukt aufgrund geschwelkter Milch oder aufgrund der Rohmilch mit den Füllmassen mit dem Buchstaben T gekennzeichnet.

Die Ausführung des Verfahrens sowie die Funktion der jeweiligen Einrichtungen wird folgenderweise sichergestellt.

Die mechanisch gereinigte, nach dem Grad des Fettgehalts standardisierte und bis zu einer Temperatur von 4-6° C gekühlte Vollmilch oder wiederaufgebaute Milch wird aus dem Sammelbehälter 1 mit der Pumpe 2 in den Kälteaustauscher 3 gegeben, wo sie bis zur Vorerhitzungstemperatur von 55-65° C bei der Erzeugung der pasteurisierten Milch und bis 70-80° C bei der Erzeugung der Gärungsmilchprodukte erwärmt wird. Die thermisierte Milch wird in den Rezirkulationsbehälter 4.1 des Dispergierungs- (Homogenisierungs-) und Pasteurisierungssystems 4 gefördert, wo sie gleichzeitig der Dispergierung (Homogenisierung) und der Pasteurisierung ausgesetzt wird. Das Wesen der Pasteurisierung ist die Entkeimung des großen Spektrums der Mikroorganismen, die in der Milch enthalten sind, durch mindestmögliche Tieftemperaturmilcherhitzung. Aus dem Behälter 5 mit Polyphosphorsäurederivat, das aus der oben erwähnten Serie genommen ist, wird die Lösung bzw. Suspension dieses Stoffs in der Menge von 0,4-0,7 g/l gleichzeitig in den Rezirkulationsbehälter 4.1 gefördert. Die Menge des verwendeten Polyphosphorsäurederivats hängt vom Grad des Keimgehalts, der Azidität (Wasserstoffionen-Bildungsfähigkeit) der Ausgangsmilch und den zulässigen Genusswerten der fertigen, pasteurisierten Milch und der Gärungsmilchprodukte ab. Die Funktion des Dispergierungs- und Pasteurisierungssystems 4 setzt eine periodische Behandlung einzelner Milchportionen in der Betriebsart der Dispergierung und Pasteurisierung für Konsummilch bis zu einer Temperatur von 68-72° C und für Gärungsmilchprodukte bis zu einer Temperatur von 80-85° C voraus. Die Umlaufzahl hängt von der Höhe dieser Temperatur, die nicht überstiegen werden darf, und vom Homogenitätsgrad der Fettkügelchen ab. Die Mittelgröße der Fettkügelchen darf maximal 0,5 mkm betragen. Der Homogenitätsgrad der Milch wird in der laufenden Betriebsart visuell mit der Verwendung eines expressiven, mikroskopischen Verfahrens bestimmt. In dieser Phase der Milchbehandlung steigert das Polyphosphorsäurederivat die Wirksamkeit der mechanischen Dispergierung mikrobieller Assoziate der Disaggregation der Mikrobensubstratassoziate an. Dadurch erhöht es ihre Temperaturempfindlichkeit, die die durchgeführte Inaktivierung der Sporen und vegetativer Zellen, die sich in der Milch befinden, und auch die Abtötungsrate bei der Tieftemperaturpasteurisierung erleichtert; dadurch erhöht es auch die Wirksamkeit der Tieftemperaturpasteurisierung und die Lagerungszeit von Milch und den Sauermilchprodukten. Das Polyphosphorsäurederivat fördert außerdem das Auslösen von Kasein und verhindert den Prozess der Unausgeglichenheit des Kalzium- und Phosphorausgleichs im Pasteurisierungsvorgang, wodurch im Endeffekt die Thermostabilität und die organoleptischen Eigenschaften der Konsummilch und der Sauermilchprodukte erhöht.

Nach Abschluss des periodischen Dispergierungs- und Pasteurisierungsvorgangs einzelner Milchportionen wird die Milch über die Rezirkulationsbehälter 4.1 (Homogenisiervorrichtung) direkt in den Standbehälter 6 gefördert, wo sie bei einer Temperatur von 68-72° C mindestens 25 Minuten bei der Erzeugung pasteurisierter Konsummilch und mindestens 15 Minuten bei der Erzeugung der Sauermilchprodukte gehalten wird. Dabei soll die Milch, die in Zukunft zur Erzeugung der Sauermilchprodukte verwendet wird, bis zum Halten bei dieser Temperatur von der Pasteurisierungstemperatur von 80-85° C bis auf 68-72° C gekühlt werden. Durch das Stehenlassen der Milch bei dieser Temperatur von 68-72° C wird der Nachteil der zu erreichenden, angegebenen Temperatur für die Entkeimung der Mikroorganismen ausgeglichen; dadurch wird die Pasteurisierungswirksamkeit erhöht. Verschiedene Haltezeiten für unterschiedliche Produkte sind durch verschiedene Pasteurisierungstemperaturen für diese Produkte zu erklären. In dieser Phase kann die Füllmasse in die Milch gegeben werden, die sich im Verschnittbehälter 18 bei der Temperatur der erste Milchpasteurisierung zur Konsummilch-Erzeugung befindet. Nach der Ablagerung im Behälter 6 wird die Milch bei der Pasteurisierungstemperatur von 68-72° C in die Abfülleinrichtung 7 mit dem hermetischen Milchverschluss gefördert. Der Sinn der heißen Abfüllung bei der Konsummilch- und Sauermilchprodukterzeugung besteht darin, dass eine nochmalige Infizierung der Milch durch eine Mikroflora reduziert wird und die Mikroorganismen gleichzeitig entkeimt werden, die sich auf der Innenfläche der zur Abfülleinrichtung führenden Rohranlage und der Verpackung befinden. Außerdem verlängert die Milchabfüllung bei Temperaturen von 68-72° C die Milchablagerung bei dieser Temperatur, und somit wird die Lagerungszeit im Halter 6 bis zu 15 Minuten für Milch und bis zu 5 Minuten für Sauermilchprodukte vermindert, wodurch der technologische Prozess beschleunigt wird. Die in die hermetische Verpackung eingegossene Milch wird weiter in den als hydrodynamischen Tunnel ausgebildeten Apparat 8 gefördert, in dem sie im Abschnitt 8.1 zur konvektiven Kühlung bis zu einer Temperatur von 12-37° C gekühlt wird und in der hermetischen Verpackung bei dieser Temperatur im Laufe von mindestens 30 Minuten gehalten wird. Diese Vorgänge sind dafür notwendig, um den größten Teil der bei der Pasteurisierung und der Ablagerung bei der Pasteurisierungstemperatur nicht entkeimten, sporenbildenden Mikroorganismen aus Rohmilch sowie den größten Teil der sporenbildenden Mikroorganismen der sekundären Entkeimung in die vegetative Form übergehen zu lassen. Der vegetative Teil der Mikroflora gegenüber der Sporenform wird besser bei der Pasteurisierungstemperatur von 68-72° C entkeimt. Das Polyphosphorsäurederivat steigert die Fähigkeit des großen Spektrums der Sporen während der Milchablagerung bei einer Temperatur von 12-37° C und beschleunigt diesen Prozess. Deshalb wird die Milch in der hermetischen Verpackung nach der Sporenkeimung im Laufe von 30 Minuten in die nochmalige Pasteurisierung bei dieser Temperatur in den Tunnelapparat 9 zur sekundären Pasteurisierung gefördert, wo sie von einer Temperatur von 12-37° C bis zu einer Temperatur von 68-72° C erhitzt wird, um die vegetative Form der gekeimten Sporen abzutöten. Um wirksam zu sein, soll die Erhitzung im Behälterumfang und mit einer Geschwindigkeit von mindestens 10° C/s mittels der UHF-Strahler sichergestellt werden, die längs des Förderbands mit der hermetisch verpackten Milch installiert sind. Wirksamer lässt der im ganzen Umfang blitzschnelle Temperatursprunganstieg der Milch bis zur angegebenen Temperatur in Zusammenhang mit den Kinetikbesonderheiten der Dekontamination der Mikroorganismen in Milch die Mikroflora in Milch im ganzen vorhandenen Umfang entkeimen. In dieser Phase wird die vegetative Mikroflora von Rohmilch und von der Verpackung im Nachpasteurisierungsvorgang beinahe völlig vernichtet, und die Abdichtung der Verpackung lässt keine Mikroflora in diese von außen kommen. Das Polyphosphorsäurederivat fördert in dieser Phase das Auslösen von Kasein und verhindert den Prozess der Unausgeglichenheit des Kalzium- und Phosphorausgleichs im Warmpasteurisierungsvorgang von Milch, wodurch die organoleptischen Eigenschaften der Endprodukte erhöht werden. Nochmals pasteurisierte Milch wird in den hydrodynamischen Kühltunnel 10 bis zu einer Temperatur von 4-6° C bei der Erzeugung pasteurisierter Milch und bis zu einer Temperatur von 17-25° C bei der Erzeugung der Gärungsmilchprodukte gegeben. Weiter wird hermetisierte, pasteurisierte Konsummilch in die Trockenanlage 11 gefördert, in der die überschüssige Feuchte von der Fläche der verpackten Milch entfernt wird. Die pasteurisierte Konsummilch wird danach in den Verschluss- und Etikettierungsapparat 12 gegeben und dann in die Kühlkammer gestellt. Im Fall der Erzeugung der Gärungsmilchprodukte werden nochmals pasteurisierte Milch oder Milch mit der Füllmasse nach dem Trockenapparat in den Apparat 13 zur direkten Säureweckergabe gefördert. Im Apparat 13 wird vorher die Verschlussmembran abgeschnitten, und der Säureerreger wird durch das Ausspritzen des trockenen oder flüssigen konzentrierten, gesäuerten Materials oder auf andere Weise, beispielsweise in Pillenform, unter UV-Bestrahlung eingetragen, um das Medium in der Säuregabe-Zone zu desinfizieren. Der Säureerreger in Pillenform kann eine Gasblasenmischung einschließen, wenn die Durchmischung von Milch mit dem Säureerreger nicht nötig ist. Das Polyphosphorsäurederivat, das aus der oben genannten Reihe genommen ist, fördert in der Phase der Milchsäuregärung das Auslösen von Eiweiß, die Regeneration des Kalzium- und Phosphorausgleichs und regt die Säurebildung der Milchsäuremikroorganismen an, wodurch im Endeffekt die organoleptischen Eigenschaften der Gärungsmilchprodukte erhöht werden. Nach der Säureweckergabe wird dien dickgelegte Milch in Flaschen in den Verschluss- und Etikettierungsapparat 12 gefördert, in dem die Flaschen in der Zone der UV-Bestrahlung endgültig verschlossen und etikettiert werden. Dann werden die etikettierten Flaschen mit gesäuerter und hermetisch verschlossener Milch in den Blockverpackungsapparat 14 gegeben, in dem die Flaschenblöcke mit einer Polymerfolie übergezogen werden. Diese Blöcke werden auf das Förderbandschüttelgerät 15 gegeben, auf dem die Blöcke, wenn es notwendig ist, geschüttelt werden, wodurch eine gleichmäßige Verteilung des gesäuerten Materials im ganzen Umfang der Milch in den Flaschen sichergestellt wird. Anschließend werden die Blöcke in die Brutkammer 16 gegeben, wo sie bei einer Temperatur von 17-25° C im Laufe von 8-12 Stunden gehalten werden. Gesäuerter Kefir, der ein festes Gerinnsel bildet und einen Säuregehalt von 75-80 % aufweist, oder ein anderes Gärungsmilchprodukt werden in die Kühlkammer 17 für die Kühlung bis 8° C und die Reifung bei dieser Temperatur gefördert.

In jedem der folgenden Beispiele ist der Prozess der Gewinnung von Konsummilch und eines Gärungsmilchprodukts, das auf der Basis der Konsummilch erzeugt ist, beschrieben. In der der Beschreibung angefügten Tabelle sind Angaben und Ergebnisse dieser Vorgänge für Konsummilch und das Gärungsmilchprodukt angegeben.

### Beispiel 1

Die von Fremdstoffen vorgereinigte Milch mit einer Anfangsazidität von 17°T wurde im Kälteaustauscher 3 bis zu einer Temperatur von 55° C bei der Erzeugung von pasteurisierter Milch und bis zu einer Temperatur von 70° C bei der Erzeugung von Kefir vorher erwärmt. Vor der ersten Dispergierung (Homogenisierung) und Pasteurisierung wurde das in Milch gut gelöste (wird in der Tabelle mit gg bezeichnet) Polyphosphorsäurederivat (in der Tabelle mit PPSD abgekürzt), das Salz der Polyphosphorsäure, gemäß der Formel:

HO-[PO₃X]ₙ-PO₃X₂

zugegeben, wobei X das Alkalimetall Na, n = 1 bis 9, im Verhältnis von 0,6 g/l Milch war. Die Dispergierung erfolgte auf einem 5-stufigen, pulsfähigen Rotorapparat (S-Emulgiervorrichtung) 4.2 im Umlaufbetrieb bei einer Pasteurisierungstemperatur von 68°C bei pasteurisierter Konsummilch-Erzeugung, 80° C bei der Kefirerzeugung, bis zum Homogenitätsgrad der Milchfettkügelchen von 0,45 mkm. Nach der ersten Dispergierung und Pasteurisierung wurde die Milch in den Halter 6 gefördert, in dem sie bei einer Temperatur von 68° C im Laufe von 15 Minuten gehalten wurde. Weiter wurde die Milch für die Konsummilcherzeugung nach der ersten Dispergierung und Pasteurisierung und der genannten Ablagerung bei der Temperatur von 68° C und ohne Vorkühlung im Kälteaustauscher 19 in die Abfülleinrichtung 7 mit dem hermetischen Milchverschluss gefördert, in der sie noch etwa 10 Minuten (ungefähre Abfüllungsdauer) gehalten wurde. Die Gesamtdauer der Milchablagerung machte bei dieser Temperatur im Standbehälter 6 und in der Abfülleinrichtung 7 25 Minuten aus.

Bei der Kefirerzeugung wurde Milch vor der Ablagerung im Standbehälter 6 im Kälteaustauscher 19 von einer Temperatur von 80° C auf eine Temperatur von 68° C heruntergekühlt; sie wurde dort im Laufe von 5 Minuten gehalten und in die Abfülleinrichtung 7 bei einer Lagerungstemperatur von 68° C zur Abfüllung und Abdichtung gefördert. Die Gesamtdauer der Milchablagerung für Kefir machte bei dieser Temperatur im Standbehälter 6 und in der Abfülleinrichtung 7 15 Minuten aus. Weiter wurde die Milch in der hermetischen Verpackung zum Apparat 8 (hydrodynamischen Tunnel) gefördert, in dem sie im Abschnitt 8.1 zur konvektiven Kühlung bis auf eine Temperatur von 24° C gekühlt und im Abschnitt 8.2 in der Verpackung bei dieser Temperatur im Laufe von mindestens 30 Minuten gehalten wurde. Danach wurde die Milch nochmals pasteurisiert; dabei wurden die UHF-Strahler im Tunnelapparat 9 zur sekundären Pasteurisierung bei einer Temperatur von 68° C verwendet. Bei der Erzeugung der pasteurisierten Konsummilch wurde die Milch nach der sekundären Pasteurisierung im hydrodynamischen Kühltunnel 10 von einer Temperatur von 68°C auf eine Temperatur von bis 4-6° C gekühlt; sie wurde dann in den Trockenapparat 11 und daraus in den Verschluss- und Etikettierungsapparat 12 gegeben. Anschließend wurde die etikettierte, verschlossene Milch in Flaschen in die Kühlkammer 17 weitergeleitet, in der sie bei einer Temperatur von 4-6° C eingelagert wurde. Bei der Erzeugung von Gärungsmilchprodukten, die auf der Basis der oben beschriebenen Milchbehandlung hergestellt wurden, wurde die Milch nach der sekundären Pasteurisierung im hydrodynamischen Kühltunnel 10 von einer Temperatur von 68° C auf eine Temperatur von 17-25° C hinuntergekühlt, in den Trockenapparat 11 und daraus in den Apparat 13 zur direkten Säureweckergabe gefördert, in dem sie durch die direkte Säureweckergabe in jede Milchverpackung zum Stocken gebracht wurde.

Nach der Säuerung, dem sekundären hermetischen Verschließen und der Etikettierung im Apparat 12, nach der Bildung eines Flaschenblocks im Apparat 14 und nach dem Schütteln im Förderbandschüttelgerät 15 wurde die dickgelegte Milch in die Brutkammer 16 gefördert, um dort bei einer Temperatur von 17-25° C gehalten und im Laufe von 8-12 Stunden gesäuert zu werden. Der gesäuerte Kefir, der ein festes Gerinnsel bildet und einen Säuregehalt von 75-80 % aufweist, wurde in die Kühlkammer gefördert, um dort gekühlt zu werden und bei einer Temperatur von 8°C zu reifen.

### Beispiel 2

Die Milchbehandlung erfolgte wie im Beispiel 1 beschrieben, jedoch galten die folgenden Unterschiede: die Temperatur der Milchvorwärmung betrug bei der Konsummilcherzeugung 65° C, bei der Kefirerzeugung 80° C; als PPSD wurde das in Milch gut gelöste (gg) Polyphosphorsäurederivat gemäß der Formel HO-[PO₃X]ₙ-PO₃X₂ genommen, wobei X das Alkalimetall K, n = 10 bis 25, im Verhältnis von 0,5 g/l war. Die Milchdispergierung und -pasteurisierung wurden bei einer Temperatur von 72° C für Konsummilch, 85° C für Kefir bis zu einem Homogenitätsgrad von 0,44 mkm vorgenommen; danach wurde die Milch bei einer Temperatur von 72° C insgesamt 25 Minuten lang für Konsummilch und 20 Minuten lang für Kefir stehen gelassen, wobei die Milch im Kälteaustauscher 19 bei einer Temperatur von 85° C bis 72° C vorgekühlt worden war. Die Milch wurde weiter nach einer heißen Abfüllung bis auf eine Temperatur von 37° C heruntergekühlt und bei dieser Temperatur im Laufe von 30 Minuten stehen gelassen und einer nochmaligen Pasteurisierung bei einer Temperatur von 72° C unterzogen.

### Beispiel 3

Die Milchbehandlung erfolgte wie im Beispiel 1 beschrieben, jedoch gab es folgende Unterschiede: die Temperatur des Milchvorwärmens betrug bei der Konsummilcherzeugung 60° C, bei der Kefirerzeugung 75° C; als PPSD wurde das in Milch gut gelöste (gg) Polyphosphorsäurederivat gemäß der Formel HO-[PO₃X]ₙ-PO₃X₂ genommen, wobei X das Ion von Ammonium, n = 1 bis 2, im Verhältnis von 0,05 g/l Milch war. Die Milchdispergierung und -pasteurisierung wurden bei einer Temperatur von 72° C für Milch und 85° C für Kefir bis zu einem Homogenitätsgrad von 0,43 mkm vorgenommen; danach wurde die Milch bei einer Temperatur von 72°C insgesamt 35 Minuten lang für Konsummilch und 15 Minuten lang für Kefir stehen gelassen, wobei die Milch im Kälteaustauscher 19 bis zu einer Temperatur von 72°C vorgekühlt worden war. Die Milch wurde weiter nach einer heißen Abfüllung bis auf eine Temperatur von 25° C heruntergekühlt und bei dieser Temperatur im Laufe von 40 Minuten gehalten und einer nochmaligen Pasteurisierung bei einer Temperatur von 71°C unterzogen.

### Beispiel 4

Der Milchbehandlungsvorgang erfolgte wie im Beispiel 1 beschrieben, jedoch gab es folgende Unterschiede: die Temperatur des Milchvorwärmens betrug bei der Konsummilcherzeugung 62° C und bei der Kefirerzeugung 77° C; als PPSD wurde das in Milch gut gelöste (gg) Polyphosphorsäurederivat gemäß der Formel HO-[PO₃X]ₙ-PO₃X₂ genommen, wobei X das Ion von Wasserstoff, n = 1 bis 2, im Verhältnis von 0,04 g/l Milch war. Die Milchdispergierung und -pasteurisierung wurden bei einer Temperatur von 69° C für Milch und 82° C für Kefir bis zu einem Homogenitätsgrad von 0,40 mkm vorgenommen; danach wurde die Milch bei einer Temperatur von 69° C insgesamt 30 Minuten lang für Konsummilch und 20 Minuten lang für Kefir stehen gelassen, wobei die Milch im Kälteaustauscher 19 bis zu einer Temperatur von 69° C vorgekühlt worden war. Die Milch wurde weiter nach einer heißen Abfüllung bis zu einer Temperatur von 30° C heruntergekühlt und bei dieser Temperatur im Laufe von 35 Minuten stehen gelassen und einer nochmaligen Pasteurisierung bei einer Temperatur von 72° C unterzogen.

### Beispiel 5

Der Milchbehandlungsvorgang erfolgte wie im Beispiel 1 beschrieben, jedoch gab es folgende Unterschiede: die Temperatur des Milchvorwärmens betrug bei der Konsummilcherzeugung 64° C und bei der Kefirerzeugung 78° C; als PPSD wurde das in Milch gut gelöste (gg) Polyphosphorsäurederivat gemäß der Formel HO-[PO₃X]ₙ-PO₃X₂ genommen, wobei X das Kalium, n ≥ 30, im Verhältnis von 0,8 g/l Milch war. Die Milchdispergierung und -pasteurisierung erfolgten bei einer Temperatur von 72° C für Milch und 85° C für Kefir bis zu einem Homogenitätsgrad von 0,43 mkm; danach wurde die Milch bei einer Temperatur von 72°C insgesamt 25 Minuten lang für Konsummilch und 15 Minuten lang für Kefir stehen gelassen, wobei die Milch im Kälteaustauscher 19 bis zu einer Temperatur von 72° C vorgekühlt worden war. Die Milch wurde weiter nach einer heißen Abfüllung bis auf eine Temperatur von 12° C gekühlt und bei dieser Temperatur im Laufe von 40 Minuten stehen gelassen und einer nochmaligen Pasteurisierung bei einer Temperatur von 69° C unterzogen.

### Beispiel 6

Der Milchbehandlungsvorgang erfolgte wie im Beispiel 1 beschrieben, jedoch gab es folgende Unterschiede: die Temperatur des Milchvorwärmens betrug bei der Konsummilcherzeugung 65°C und bei der Kefirerzeugung 80° C; als PPSD wurde das in Milch schlecht gelöste (sg) Polyphosphorsäurederivat gemäß der Formel HO-[PO₃X]ₙ-PO₃X₂ genommen, wobei X das Kalzium, n = 2, im Verhältnis von 0,7 g/l Milch war. Die Milchdispergierung und -pasteurisierung wurden bei einer Temperatur von 72°C für Milch und 85° C für Kefir bis zu einem Homogenitätsgrad von 0,40 mkm vorgenommen; danach wurde die Milch bei einer Temperatur von 72° C insgesamt 30 Minuten lang für Konsummilch und 20 Minuten lang für Kefir stehen gelassen, wobei die Milch im Kälteaustauscher 19 auf eine Temperatur von 72° C vorgekühlt worden war. Die Milch wurde weiter nach einer heißen Abfüllung auf eine Temperatur von 35° C heruntergekühlt und bei dieser Temperatur im Laufe von 30 Minuten gehalten und einer nochmaligen Pasteurisierung bei einer Temperatur von 72°C unterzogen.

### Beispiel 7

Der Milchbehandlungsvorgang erfolgte wie im Beispiel 1 beschrieben, jedoch gab es folgende Unterschiede: die Temperatur des Milchvorwärmens betrug bei der Konsummilcherzeugung 63° C und bei Kefirerzeugung 76° C; als PPSD wurde das in Milch gut gelöste (gg) Polyphosphorsäurederivat gemäß der Formel HO-[PO₃X]ₙ-PO₃X₂ genommen, wobei X das Magnesium, n = 1 bis 2, im Verhältnis von 0,4 g/l Milch war. Die Milchdispergierung und -pasteurisierung wurden bei einer Temperatur von 70°C für Milch und 81° C für Kefir bis zu einem Homogenitätsgrad von 0,42 mkm durchgeführt; danach wurde die Milch bei einer Temperatur von 70°C insgesamt 35 Minuten lang für Konsummilch und 20 Minuten lang für Kefir gehalten, wobei die Milch im Kälteaustauscher 19 bis auf eine Temperatur von 70° C vorgekühlt worden war. Die Milch wurde weiter nach einer heißen Abfüllung bis auf eine Temperatur von 20° C heruntergekühlt und bei dieser Temperatur im Laufe von 35 Minuten stehen gelassen und einer nochmaligen Pasteurisierung bei einer Temperatur von 70° C unterzogen.

### Beispiel 8

Der Milchbehandlungsvorgang erfolgte wie im Beispiel 1 beschrieben, jedoch gab es folgende Unterschiede: die Temperatur des Milchvorwärmens betrug bei der Konsummilcherzeugung 64°C und bei der Kefirerzeugung 78° C; als PPSD wurde das in Milch schlecht gelöste (sg) Polyphosphorsäurederivat gemäß der Formel HO-[PO₃X]ₙ-PO₃X₂ genommen, wobei X das Magnesium, n = 5 bis 9, im Verhältnis von 0,4 g/l Milch war. Die Milchdispergierung und -pasteurisierung wurden bei einer Temperatur von 69° C für Milch und 82° C für Kefir bis zu einem Homogenitätsgrad von 0,44 mkm vorgenommen; danach wurde die Milch bei einer Temperatur von 69° C insgesamt 25 Minuten lang für Konsummilch und 15 Minuten lang für Kefir stehen gelassen, wobei die Milch im Kälteaustauscher 19 bis auf eine Temperatur von 69°C vorgekühlt worden war. Die Milch wurde weiter nach einer heißen Abfüllung bis auf eine Temperatur von 32° C heruntergekühlt und bei dieser Temperatur im Laufe von 35 Minuten stehen gelassen und einer nochmaligen Pasteurisierung bei einer Temperatur von 70° C unterzogen.

### Beispiel 9

Der Milchbehandlungsvorgang erfolgte wie im Beispiel 1 beschrieben, jedoch gab es folgende Unterschiede: die Temperatur des Milchvorwärmens betrug bei der Konsummilcherzeugung 68° C und bei der Kefirerzeugung 83°C; als PPSD wurde das in Milch nicht gelöste (ng) Polyphosphorsäurederivat gemäß der Formel HO-[PO₃X]ₙ-PO₃X₂ genommen, wobei X das Kalzium, n = 10 bis 25, im Verhältnis von 0,7 g/l Milch war. Die Milchdispergierung und -pasteurisierung wurden bei einer Temperatur von 76° C für Milch und 90° C für Kefir bis zu einem Homogenitätsgrad von 0,40 mkm vorgenommen; danach wurde die Milch bei einer Temperatur von 76° C insgesamt 40 Minuten lang für Konsummilch und 30 Minuten lang für Kefir stehen gelassen, wobei die Milch im Kälteaustauscher 19 bis auf eine Temperatur von 76° C vorgekühlt worden war. Die Milch wurde weiter nach der heißen Abfüllung bis auf eine Temperatur von 37°C heruntergekühlt und bei dieser Temperatur im Laufe von 45 Minuten gehalten und einer nochmaligen Pasteurisierung bei einer Temperatur von 76°C unterzogen.

### Beispiel 10

Der Milchbehandlungsvorgang erfolgte wie im Beispiel 1 beschrieben, jedoch gab es folgende Unterschiede: die Temperatur des Milchvorwärmens betrug bei der Konsummilcherzeugung 60° C und bei der Kefirerzeugung 83°C; als PPSD wurde das in Milch gut gelöste (gg) Polyphosphorsäurederivat gemäß der Formel HO-[PO₃X]ₙ-PO₃X₂ genommen, wobei X das Kalium, n = 1 bis 9, im Verhältnis von 0,5 g/l Milch war. Die Milchdispergierung und -pasteurisierung wurden in der Dispergiervorrichtung PRA-15 bei einer Temperatur von 69°C für Milch und 82° C für Kefir bis zu einem Homogenitätsgrad von 0,43 mkm durchgeführt; danach wurde die Milch bei einer Temperatur von 69° C insgesamt 30 Minuten lang für Konsummilch und 20 Minuten lang für Kefir stehen gelassen, wobei die Milch im Kälteaustauscher 19 bis auf eine Temperatur von 69°C vorgekühlt worden war. Die Milch wurde weiter nach einer heißen Abfüllung bis auf eine Temperatur von 36°C heruntergekühlt und bei dieser Temperatur im Laufe von 30 Minuten gehalten und einer nochmaligen Pasteurisierung bei einer Temperatur von 72°C unterzogen.

### Beispiel 11

Der Milchbehandlungsvorgang erfolgte wie im Beispiel 1 beschrieben, jedoch gab es folgende Unterschiede: Die Temperatur des Milchvorwärmens betrug bei der Konsummilcherzeugung 62°C, und bei der Kefirerzeugung 77°C; als PPSD wurde das in Milch nicht gelöste (ng) Polyphosphorsäurederivat gemäß der Formel HO-[PO₃X]ₙ-PO₃X₂ genommen, wobei X das Kalzium, n ≥ 30, im Verhältnis von 0,7 g/l Milch war. Die Milchdispergierung und -pasteurisierung wurden in der Dispergiervorrichtung PRA-15 bei einer Temperatur von 72°C für Milch und 85° C für Kefir bis zu einem Homogenitätsgrad von 0,41 mkm vorgenommen; danach wurde die Milch bei einer Temperatur von 72°C insgesamt 30 Minuten lang für Konsummilch und 15 Minuten lang für Kefir stehen gelassen, wobei die Milch im Kälteaustauscher 19 bis zu Temperatur von 72° C vorgekühlt worden war. Die Milch wurde weiter nach einer heißen Abfüllung bis auf eine Temperatur von 28°C heruntergekühlt und bei dieser Temperatur im Laufe von 30 Minuten gehalten und einer nochmaligen Pasteurisierung bei einer Temperatur von 71°C unterzogen.

### Beispiel 12

Der Milchbehandlungsvorgang erfolgte wie im Beispiel 1 beschrieben, jedoch gab es folgende Unterschiede: die Temperatur des Milchvorwärmens betrug bei Konsummilcherzeugung 65°C und bei der Kefirerzeugung 79° C; als PPSD wurde das in Milch gut gelöste (gg) Polyphosphorsäurederivat gemäß der Formel HO-[PO₃X]ₙ-PO₃X₂ genommen, wobei X das Ion von Ammonium, n ≥ 30, im Verhältnis von 0,5 g/l Milch war. Die Milchdispergierung und -pasteurisierung wurden in der Dispergiervorrichtung bei einer Temperatur von 71°C für Milch und 82°C für Kefir bis zu einem Homogenitätsgrad von 0,42 mkm vorgenommen; danach wurde die Milch bei einer Temperatur von 71° C insgesamt 35 Minuten lang für Konsummilch und 20 Minuten lang für Kefir stehen gelassen, wobei die Milch im Kälteaustauscher 19 bis auf eine Temperatur von 71° C vorgekühlt worden war. Die Milch wurde weiter nach einer heißen Abfüllung bis auf eine Temperatur von 25°C heruntergekühlt und bei dieser Temperatur im Laufe von 35 Minuten stehen gelassen und einer nochmaligen Pasteurisierung bei einer Temperatur von 70°C unterzogen.

### Beispiel 13

Der Milchbehandlungsvorgang erfolgte wie im Beispiel 1 beschrieben, jedoch gab es folgende Unterschiede: die Temperatur des Milchvorwärmens betrug bei der Konsummilcherzeugung 66° C und bei der Kefirerzeugung 79° C; als PPSD wurde das in Milch nicht gelöste (ng) Polyphosphorsäurederivat gemäß der Formel HO-[PO₃X]ₙ-PO₃X₂ genommen, wobei X das Magnesium, n = 10 bis 25, im Verhältnis von 0,6 g/l Milch war. Die Milchdispergierung und -pasteurisierung wurden in der Dispergiervorrichtung bei einer Temperatur von 72° C für Milch und 84° C für Kefir bis zu einem Homogenitätsgrad von 0,44 mkm vorgenommen; danach wurde die Milch bei einer Temperatur von 72° C insgesamt 30 Minuten lang für Konsummilch und 15 Minuten lang für Kefir stehen gelassen, wobei die Milch im Kälteaustauscher 19 bis auf eine Temperatur von 72°C vorgekühlt worden war. Die Milch wurde weiter nach einer heißen Abfüllung bis auf eine Temperatur von 34° C heruntergekühlt und bei dieser Temperatur im Laufe von 35 Minuten stehen gelassen und einer nochmaligen Pasteurisierung bei einer Temperatur von 69°C unterzogen.

### Beispiel 14

Der Milchbehandlungsvorgang erfolgte wie im Beispiel 1 beschrieben, jedoch gab es folgende Unterschiede: die Temperatur des Milchvorwärmens betrug bei der Konsummilcherzeugung 60° C und bei der Azydophilinerzeugung 75° C; als PPSD wurde das in Milch gut gelöste (gg) Polyphosphorsäurederivat gemäß der Formel HO-[PO₃]ₙ-PO₃X₂ genommen, wobei X das Natrium, n = 15 bis 20, im Verhältnis von 0,4 g/l Milch war. Die Milchdispergierung und -pasteurisierung wurden im Dispergiermittel bei einer Temperatur von 72°C für Milch und 85° C für Azidophilin bis zu einem Homogenitätsgrad von 0,40 mkm vorgenommen; danach wurde die Milch bei einer Temperatur von 72°C insgesamt 30 Minuten lang für Konsummilch und 15 Minuten lang für Azidophilin gehalten, wobei die Milch im Kälteaustauscher 19 bis zu einer Temperatur von 72°C vorgekühlt worden war. Die Milch wurde weiter nach einer heißen Abfüllung bis auf eine Temperatur von 12° C heruntergekühlt und bei dieser Temperatur im Laufe von 45 Minuten gehalten und einer nochmaligen Pasteurisierung bei einer Temperatur von 72° C unterzogen.

### Beispiel 15

Der Vorgang der Kefirerzeugung wurde in Übereinstimmung mit dem Patent der russischen Föderation Nr. 2222952 mit dem Thermostatverfahren bei der Milchbehandlung für Kefir auf eine progressive Weise durchgeführt, bei dem das Milchvorwärmen bis zu einer Temperatur von 45°C unter Anwendung des Infrarotstrahlers erfolgte; anschließend wurde eine zweimalige Dispergierung und Pasteurisierung bei einer Temperatur von 72° C vorgenommen, bis ein Homogenitätsgrad von 0,5-1,1 mkm unter Anwendung des 5-stufigen S-Emulgiermittels erreicht wurde.

### Beispiel 16

Der Vorgang der Kefirerzeugung wurde mit dem Thermostatverfahren bei der Milchbehandlung für Kefir auf eine traditionelle Weise in der Plungerdispergiervorrichtung mit einer einmaligen Pasteurisierung bei einer Temperatur von 80-85° C durchgeführt.

Aus der Tabelle geht hervor, dass die thermische Milchstabilität erhöht, die Lagerungsfähigkeit von Konsummilch und von den Gärungsmilchprodukten verlängert, die organoleptischen Geschmackseigenschaften von Konsummilch und den Gärungsmilchprodukten in Bezug auf die vergleichbaren Erzeugnisse und den Prototyp verbessert werden, vorausgesetzt, dass alle Bedingungen der Milchbehandlung und der Erzeugung von Gärungsmilchprodukten, die in den Patentenansprüchen angeführt sind, eingehalten werden. Davon zeugen die Beispiele 1, 2, 4, 7, 10, 12, 14. Werden die vorgeschlagenen Bedingungen teilweise nicht eingehalten, so lässt sich die Besserung nicht in allen Punkten beobachten. So ergibt das Beispiel 6, das die Milchbehandlung und die Erzeugung der Gärungsmilchprodukte bei der Verwendung des schlecht gelösten Polyphosphorsäurederivats mit dem Kalzium beschreibt, eine Besserung der thermischen Stabilität, der Lagerungsfähigkeit, der organoleptischen Eigenschaften von Kefir, jedoch wird der Milchgeschmack nicht besser (wenn auch nicht schlimmer). Im Beispiel 3 ist die Menge des Polyphosphorsäurederivats ungefähr um eine Größenordnung geringer, als es vorgeschlagen worden ist; darum ist die thermische Stabilität nicht gebessert, und die Genusswerte von Milch werden nicht geändert, obwohl die Lagerungsfähigkeit von Milch und Kefir gegenüber denen der vergleichbaren Erzeugnissen und dem Prototyp gestiegen ist. Im Beispiel 5 verbessert die Überdosierung des Polyphosphorsäurederivats in einer Größe von 0,1 g/l (insgesamt wurde 0,8 g/l hineingegeben) die thermische Stabilität von Milch, die Lagerungsfähigkeit von Milch und den Gärungsmilchprodukten, aber sie verringert die Organoleptik. Unlösliche Polyphosphorsäurederivate (Beispiele 9, 11, 13) verbessern die Lagerungsfähigkeit; dabei verschlechtern sich jedoch die Genusswerte der Produkte. Wenn die Pasteurisierungstemperatur höher als oben vorgeschlagen (Beispiel 9) gesetzt wird, entsteht der Geschmack der Überpasteurisierung von Milch. Auf diese Weise wird die gestellte Aufgabe nur im Umfang der Erfindungsmerkmale gelöst, die sich in den unabhängigen Positionen der Formel widerspiegeln. Dabei sind je nach der Ausführungsvariante der Erfindung die im Vergleich zu den besten Varianten besten oder verschlechterten Erzeugnisse im Rahmen der gelösten Erfindungsaufgabe zu beobachten. Auf diese Weise gelten als die wirksamsten Varianten solche, bei denen die in Milch gut gelösten Polyphosphorsäurederivate (in der Spalte 6 der Tabelle sind sie mit der Abkürzung gg gekennzeichnet) mit ihrem Gehaltanteil innerhalb des angemeldeten, quantitativen Bereichs, mit geringen "n"-Werten von 1 bis 25 verwendet werden, wenn eine bedeutende Erhöhung der Lagerungsfähigkeit (22-30 Tage) und der thermischen Stabilität (Kategorie 1) zu beobachten ist. Dazu gehören die Beispiele 2, 4, 7, 10, 14 und einige andere. Vom Standpunkt der Besserung der organoleptischen Eigenschaften von Milch und von den Gärungsmilchprodukten aus gelten als die besten jene Varianten, bei denen der minimale Gehalt von Zugaben des Polyphosphorsäurederivats im Rahmen des angemeldeten, quantitativen Bereichs verwendet wird. Die Lagerungszeit von Milch sowie der Wert der thermischen Stabilität sind auf jeden Fall im Vergleich zum Prototyp bedeutend gesteigert, und die organoleptischen Eigenschaften von Milch und den Gärungsmilchprodukten werden gebessert.

### Informationsquellen

1. Bredichin, A. S., Kosmodemjanskij, J. W., Jurin, W. N., Technologie und Technik der Milchbehandlung, Moskau, Kolos, 2001, 399 Seiten, S. 272, 273, 275 = Prototyp für das Verfahren und die Fertigungsstraße zur Erzeugung von Sauermilchprodukten;
2. Patent der russischen Föderation Nr. 2166855, Verfahren zur Herstellung von Konsummilch (Varianten), MPK7, A23C9/00, veröffentlicht am 20.05.2001;
3. Patent der russischen Föderation Nr. 2222952, Verfahren und Fertigungsstraße zur Erzeugung von Konsummilch, MPK7, A23C 9/00; 3/00, A01J11/00, veröffentlicht am 10.02.2004, Bulletin Nr. 4, Prototyp für das Verfahren und die Fertigungsstraße der Milchbehandlung.

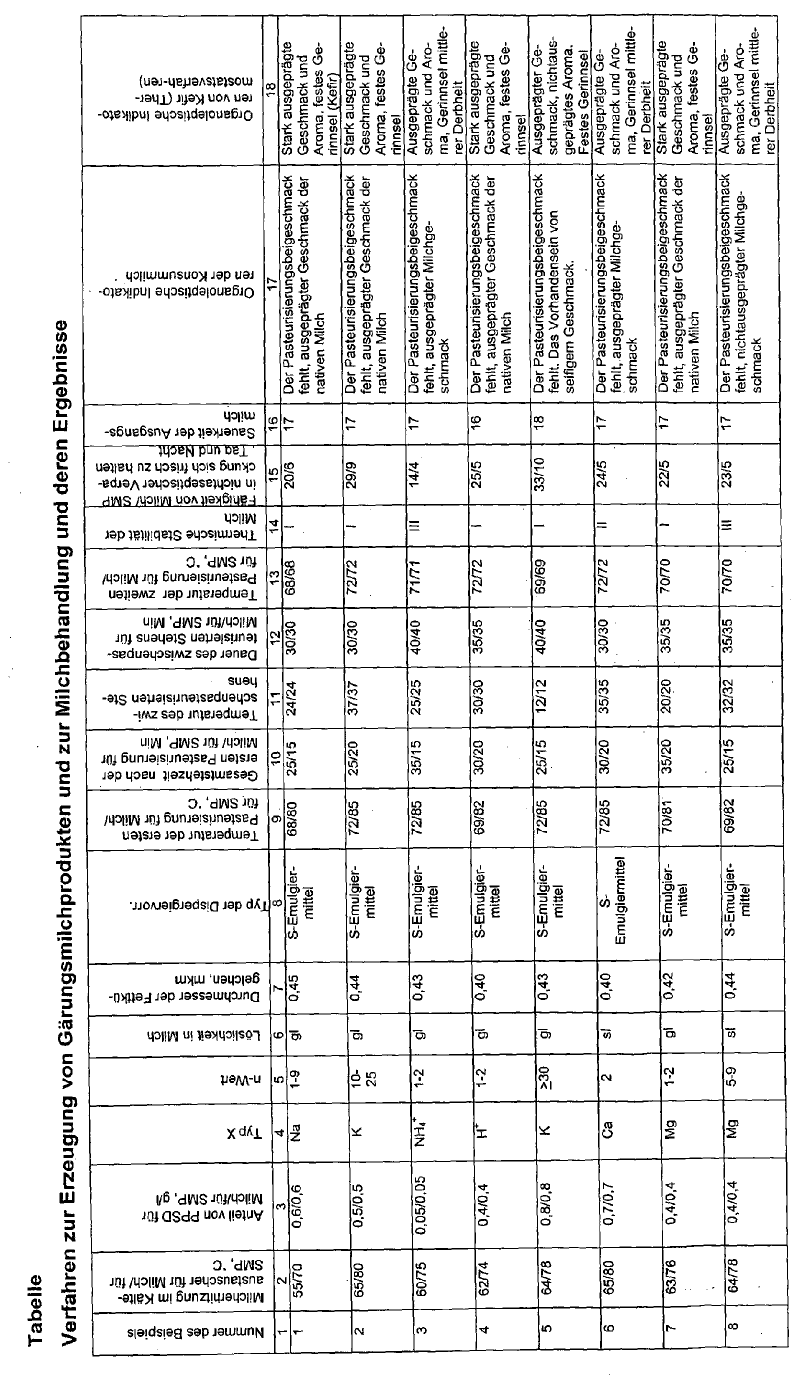

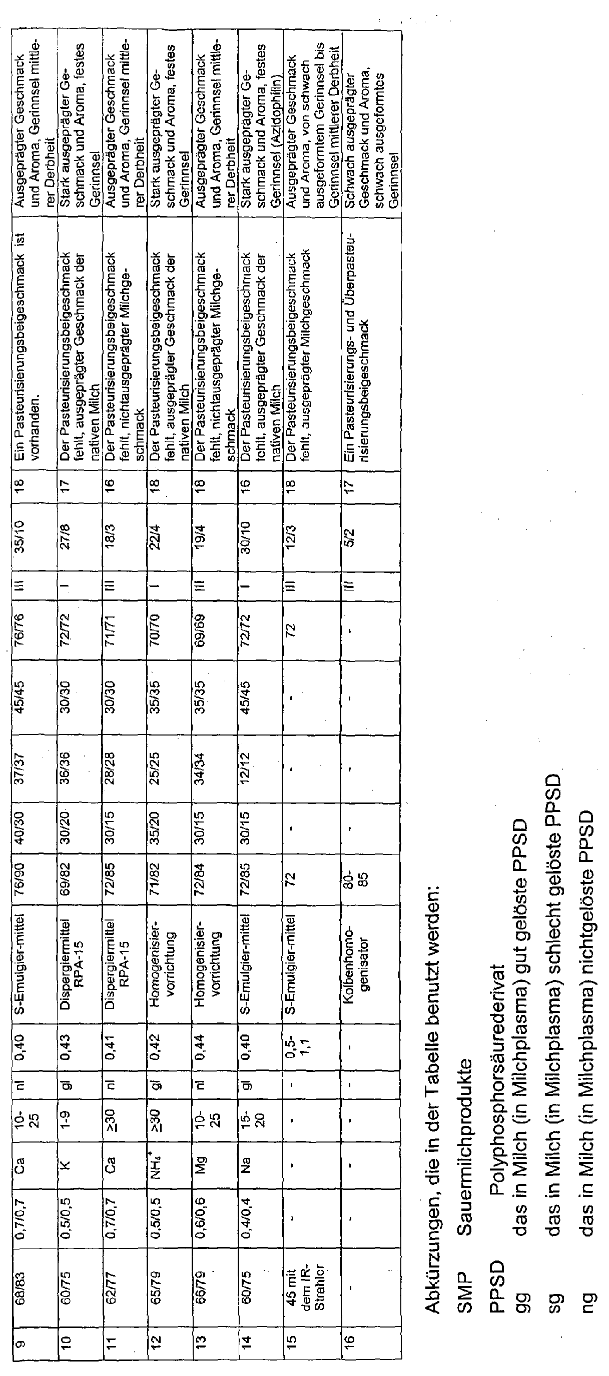

## Patentansprüche

1. Verfahren zur Erzeugung von Sauermilchprodukten, das die Milchbehandlung mit der Pasteurisierung und Homogenisierung, das Milchansäuern mit dem Verfahren der direkten Säureweckergabe, die Abfüllung und die Verpackung, die Säuerung mit der Thermosteuerung, die Kühlung und die Reifung einschließt,
**dadurch gekennzeichnet,**
**dass** der Vorgang der Milchbehandlung und die nachfolgenden Vorgänge der Erzeugung der Sauermilchprodukte beim Vorhandensein des in Milch gelösten Polyphosphorsäurederivats gemäß der folgenden, allgemeinen Formel durchgeführt werden:
HO-[PO₃X]ₙ-PO₃X₂,
wobei X Ionen des Natriums, Kaliums, Kalziums, Magnesiums, Wasserstoffs oder des Ammoniums sind, 30 ≥n ≥ 1 ist und die Formel einen Zählwert von 0,4-0,7 g/l aufweist, wobei die Milchbehandlung mit einer zweifachen Pasteurisierung erfolgt, die Abfüllung und die Verpackung mit Abdichtung bei einer Temperatur von 68-72°C bis zur zweiten Pasteurisierung sichergestellt werden und die Säureweckergabe in hermetisch verpackter Milch bei deren Enthermetisierung und bei einer Ultraviolettbestrahlung der Säureweckergabe-Zone mit nachfolgender Endabdichtung der Verpackung vorgenommen wird.

2. Verfahren nach Anspruch 1,
**dadurch gekennzeichnet,**
**dass** nach der Säureweckergabe eine Durchmischung durch Schütteln des verschlossenen Produkts vorgenommen wird.

3. Verfahren nach Anspruch 1,
**dadurch gekennzeichnet,**
**dass** es durch den Vorgang des Zusatzes von pasteurisierten Stückchen aus Gemüse, Obst, Beeren oder anderen Füllmassen in Milch nach deren erster Pasteurisierung ergänzt ist, wobei die Temperatur für Milch und Sauermilchprodukte 68-72 Grad beträgt und die Vorgange für geschwelkte Milch und Sauermilchprodukte bei der Temperatur des warmen Schwelkens durchgeführt werden.

4. Milchbehandlungsverfahren, das den kombinierten Vorgang der Dispergierung (Homogenisierung) und der Pasteurisierung mit einer zweimaligen Pasteurisierung, die Abfüllung und die Abdichtung einschließt,
**dadurch gekennzeichnet,**
**dass** die Milchbehandlung beim Vorhandensein des in Milch gelösten Polyphosphorsäurederivats gemäß der folgenden, allgemeinen Formel durchgeführt wird:
HO-[PO₃X]ₙ-PO₃X₂,
wobei X die Ionen des Natriums, Kaliums, Kalziums, Magnesiums, Wasserstoffs oder des Ammoniums sind, 30 ≥ n ≥ 1 ist und die Formel einen Zählwert von 0,4-0,7 g/l aufweist, wobei nach einer ersten Pasteurisierung die Milch bei einer Temperatur von 68-72 Grad mindestens 15 Minuten für die pasteurisierte Konsummilch und mindestens 5 Minuten für die Sauermilchprodukte stehen gelassen wird, die Abfüllung mit der Abdichtung nach der Ablagerung bei der Temperatur dieser Ablagerung durchgeführt wird, danach die Kühlung der hermetisch verschlossenen, heißen Milch bis auf eine Temperatur von 12-37°C sowie die Ablagerung bei dieser Temperatur mindestens 30 Minuten lang erfolgt und die zweite Pasteurisierung nach der angegebenen Ablagerung mit der Milcherhitzung bis auf eine Temperatur von 68-72°C mit einer Geschwindigkeit von mindestens 10°C/s mittels UHF-Strahlern durchgeführt wird.

5. Verfahren nach Anspruch 4,
**dadurch gekennzeichnet,**
**dass** der Prozess der Dispergierung (Homogenisierung) solange vor sich geht, bis die Fettkügelchen eine Größe von über 0,5 mkm erreichen.

6. Fertigungsstraße zur Erzeugung von Sauermilchprodukten, die eine Einrichtung für die Milchbehandlung mit einer Homogenisiervorrichtung, einer Pasteurisierungsanlage, eine Einrichtung zur direkten Säureweckergabe, eine Abfülleinrichtung mit einer Abdichtungsanlage, eine Brutkammer, eine Kühlkammer einschließt, wobei diese Einrichtungen in Übereinstimmung mit dem technologischen Ablauf angeordnet und miteinander verbunden sind,
**dadurch gekennzeichnet,**
**dass** die Abfülleinrichtung mit der Abdichtungsanlage vor der Einrichtung zur Säureweckergabe angeordnet ist, die Einrichtung zur Säureweckergabe mit der Enthermetisierungsanlage und der Endabdichtungsanlage, die nach der Einrichtung zur Säureweckergabe untergebracht sind, mit UV-Strahlern ergänzt ist, die längs der Grenze der Säureweckergabe-Zone angeordnet sind.

7. Fertigungsstraße nach Anspruch 6,
**dadurch gekennzeichnet,**
**dass** sie mit einer Rührvorrichtung der Milch mit einem Säureerreger versehen ist, wobei die Rührvorrichtung als Förderbandschüttelgerät ausgebildet und zwischen der Einrichtung zur Säureweckergabe und der Brutkammer angeordnet ist.

8. Fertigungsstraße nach Anspruch 6,
**dadurch gekennzeichnet,**
**dass** die Fördereinrichtung nach der Abfülleinrichtung in Form eines Förderbands ausgebildet ist.

9. Einrichtung zur Milchbehandlung, die einen Rezirkulationsbehälter, eine Dispergiervorrichtung und eine Homogenisiervorrichtung, eine Abfülleinrichtung und eine Abdichtungsanlage einschließt, wobei diese Einrichtungen in der Reihenfolge des verfahrenstechnischen Ablaufs angeordnet und miteinander mittels Rohrleitungen verbunden sind, der Ausgang der Dispergiervorrichtung mit dem Eingang des Rezirkulationsbehälters verbunden ist und der Ausgang des Rezirkulationsbehälters mit dem Eingang der Dispergiervorrichtung verbunden ist, wobei ein geschlossener Kreis für einen mehrmaligen Milchumlauf durch die Dispergiervorrichtung gebildet ist,
**dadurch gekennzeichnet,**
**dass** sie mit einem zusätzlichen Behälter für eine Wasserlösung bzw. Suspension des Polyphosphorsäurederivats gemäß der folgenden, allgemeinen Formel ausgerüstet ist:
HO-[PO₃X]ₙ-PO₃X₂,
wobei X Ionen des Natriums, Kaliums, Kalziums, Magnesiums, Wasserstoffs oder des Ammoniums sind, 30 ≥ n ≥ 1 ist und die Formel einen Zählwert von 0,4-0,7 g/l aufweist, wobei dieser Behälter mit dem Eingang der Dispergiervorrichtung verbunden und mit einem Standbehälter ergänzt ist, in dem die Milch bei einer Temperatur von 68-72° C stehen gelassen wird, wobei ferner der Eingang des Standbehälters mit dem Ausgang der Dispergiervorrichtung verbunden und der Ausgang mit der Abfülleinrichtung und dem Kühler verbunden ist, der die Milch in einem Temperaturbereich von 12 bis 37°C abkühlen lässt, und der nach der Abfülleinrichtung angeordnet ist, wobei ferner die Milchbehandlungseinrichtung mit einem Milchhalter, in dem die Temperatur der Milch auf 12 bis 37°C gehalten wird, und einem Tunnelapparat zur sekundären Pasteurisierung mit dem Förderband ausgerüstet ist, der mit UHF-Strahlern ausgestattet ist, die längs des Förderbands angeordnet sind und eine Milch-Temperaturanstiegsrate von mindestens 10° C/s bis zu einer Temperatur von 68-72° C sicherstellen.

10. Einrichtung nach Anspruch 9,
**dadurch gekennzeichnet,**
**dass** der Standbehälter als Durchmischungsapparat mit einem Wassermantel ausgeführt ist, der an die Kühlmittelsströmung angeschlossen ist.

11. Einrichtung nach Anspruch 9,
**dadurch gekennzeichnet,**
**dass** der Standbehälter in Form eines durchgängigen, hydrodynamischen Kühlfördertunnel ausgebildet ist.

## Claims

1. A method for creating sour milk products, which includes milk treatment by pasteurization and homogenization, souring the milk by the method of direct addition of souring starter, filling and packaging, souring by thermal control, cooling, and maturing,
**characterized in that**
the process of milk treatment and the ensuing processes of creating the sour milk products in the presence of the polyphosphoric acid derivative dissolved in milk are performed in accordance with the following general formula:
HO-[PO₃S]ₙ-PO₃X₂,
in which X stands for ions of sodium, potassium, calcium, magnesium, hydrogen, or ammonium, 30 ≥ n ≥ 1, and the formula has a numerical value of 0.4-0.7 g/l, and the milk treatment is done with a double pasteurization, the filling and packaging with sealing at a temperature of 68-72°C until the second pasteurization is ensured, and the souring starter addition is done in hermetically packaged milk upon the reversal of its hermetic sealing and with ultraviolet irradiation of the souring starter addition zone with ensuing final sealing of the package.

2. The method as defined by claim 1,
**characterized in that**
after the souring starter addition, thorough mixing is performed by shaking the closed product.

3. The method as defined by claim 1,
**characterized in that** it is supplemented by the process of adding pasteurized particles of vegetable, fruit, berries or other filling masses in milk after its first pasteurization, and the temperature for the milk and the sour milk products is 68-72°, and the processes for air-dried milk and sour milk products are done at the temperature of the warm air-drying.

4. A milk treatment method, which includes the combined process of dispersion (homogenization), pasteurization twice, and filling and sealing,
**characterized in that**
the milk treatment is performed in the presence of the polyphosphoric acid derivative dissolved in milk are performed in accordance with the following general formula:
HO-[PO₃S]ₙ-PO₃X₂,
in which X stands for ions of sodium, potassium, calcium, magnesium, hydrogen, or ammonium, 30 ≥ n ≥ 1, and the formula has a numerical value of 0.4-0.7 g/l, and after a first pasteurization, the milk is left to stand at a temperature of 68- 72° for at least 15 minutes for the pasteurized milk for drinking and for at least 5 minutes for the sour milk products, the filling with sealing after the storage is performed at the temperature of that storage, after that the cooling of the hermetically sealed, hot milk down to a temperature of 12-37°C and storage at that temperature for at least 30 minutes are done, and the second pasteurization is performed after the aforementioned storage with heating of the milk up to a temperature of 68-72°C at a rate of at least 10°C/s by means of UHF emitters.

5. The method as defined by claim 1,
**characterized in that**
the process of dispersion (homogenization) continues until such time as the fat globules attain a size of over 0.5 mkm.

6. A production line for creating sour milk products, which includes a device for milk treatment with a homogenizer, a pasteurization system, a device for direct souring starter addition, a filling device with a sealing system, an incubator, and a cooling chamber, these devices being disposed and communicating with one another in accordance with the technological sequence,
**characterized in that**
the filling device with the filling system is disposed upstream of the device for souring starter addition, and the device for souring starter addition, having the hermetic sealing reversal system and the final sealing system which are accommodated downstream of the device for souring starter addition, is supplemented with UV emitters, which are disposed along the boundary of the souring starter addition zone.

7. The production line as defined by claim 6,
**characterized in that**
it is provided with a stirring device of the milk with a souring agent, and the stirring device is embodied as a conveyor belt shaking apparatus and is disposed between the device for souring starter addition and the incubator.

8. The production line as defined by claim 6,
**characterized in that**
the conveyor device downstream of the filling device is embodied in the form of a conveyor belt.

9. An apparatus for milk treatment, which includes a recirculation container, a dispersion device and a homogenizer, a filling device and a sealing system, and these devices are disposed in the order of the technological sequence of the method and communicate with one another by means of pipelines, the outlet of the dispersion device communicates with the inlet of the recirculation container, and the outlet of the recirculation container communicates with the inlet of the dispersion device, and a closed circle is formed for circulation of the milk multiple times through the dispersion device,
**characterized in that**
it is equipped with an additional container for an aqueous solution or suspension of the polyphosphoric acid derivative in accordance with the following general formula:
HO-[PO₃S]ₙ-PO₃X₂,
in which X stands for ions of sodium, potassium, calcium, magnesium, hydrogen, or ammonium, 30 ≥ n ≥ 1, and the formula has a numerical value of 0.4-0.7 g/l, and this container communicates with the inlet of the dispersion device and is supplemented with a standing container in which the milk is left to stand at a temperature of 68-72°C, and furthermore the inlet of the standing container communicates with the outlet of the dispersion device and the outlet communicates with the filling device and the cooler, which cools the milk to a temperature range of from 12 to 37°C and which is disposed downstream of the filling device, and furthermore the milk treatment device is equipped with a milk keeper, in which the temperature of the milk is kept at from 12 to 37°C, and with a tunnel apparatus for secondary pasteurization with the conveyor belt, which is equipped with UHF emitters that are disposed along the conveyor belt and ensure a milk temperature increase rate of at least 10°C/s up to a temperature of 68-72°C.

10. The apparatus as defined by claim 9,
**characterized in that**
the standing container is embodied as a mixing apparatus with a water jacket, which is connected to the coolant flow.

11. The apparatus as defined by claim 9,
**characterized in that**
the standing container is embodied in the form of a continuous, hydrodynamic cooling conveyor tunnel.

## Revendications

1. Procédé de génération ou de fabrication de produits à base de lait caillé, qui comprend le traitement du lait par la pasteurisation et l'homogénéisation, l'acidification du lait par le procédé de l'ajout direct de ferment lactique, le soutirage et le conditionnement, l'acidification par la thermocommande, le refroidissement et la maturation,
**caractérisé en ce que** le procédé de traitement du lait et les procédés suivants de génération des produits à base de lait caillé sont réalisés en présence du dérivé d'acide polyphosphorique dissous dans le lait et répondant à la formule générale suivante : HO-[PO₃X]ₙ-PO₃X₂,
dans laquelle X représente des ions du sodium, du potassium, du calcium, du magnésium, de l'hydrogène ou de l'ammonium, 30 ≥ n ≥ 1, et la formule présente une valeur de 0,4-0,7 g/l, le traitement du lait se faisant par une pasteurisation double, le soutirage et le conditionnement avec étanchéification à une température de 68-72 °C est garanti jusqu'à la seconde pasteurisation, et l'ajout de ferment lactique dans le lait conditionné de façon hermétique étant entrepris lors de la désétanchéification et avec un rayonnement aux ultraviolets de la zone d'ajout de ferment lactique, suivi d'une étanchéification finale consécutive de l'emballage.

2. Procédé selon la revendication 1, **caractérisé en ce qu'**après l'ajout de ferment lactique est entrepris un mélange par agitation du produit enfermé.

3. Procédé selon la revendication 1, **caractérisé en ce qu'**il est complété par le procédé de l'ajout de morceaux pasteurisés de légumes, de fruits, de baies ou d'autres masses de charge dans le lait après sa première pasteurisation, la température du lait et des produits de lait caillé étant de 68-72 degrés et les procédés pour le lait égoutté et les produits de lait caillé se faisant à la température de l'égoutté chaud.

4. Procédé de traitement du lait qui comprend le procédé combiné de la dispersion (homogénéisation) et de la pasteurisation par une pasteurisation double, le soutirage et l'étanchéification, **caractérisé en ce que** le traitement du lait est réalisé en présence du dérivé d'acide polyphosphorique dissous dans le lait et répondant à la formule générale suivante : HO-[PO₃X]ₙ-PO₃X₂,
dans laquelle X représente des ions du sodium, du potassium, du calcium, du magnésium, de l'hydrogène ou de l'ammonium, 30 ≥ n ≥ 1, et la formule présente une valeur de 0,4-0,7 g/l, où après une première pasteurisation le lait est mis à reposer à une température de 68-72 degrés pendant au moins 15 minutes pour le lait de consommation pasteurisé et au moins 5 minutes pour les produits de lait caillé, le soutirage avec la fermeture étanche se fait après le dépôt à la température de ce dépôt, puis le refroidissement du lait chaud enfermé de façon hermétique jusqu'à une température de 12-37°C ainsi que le dépôt à cette température pendant au moins 30 minutes, et on réalise la seconde pasteurisation après le dépôt indiqué avec le chauffage du lait jusqu'à une température de 68-72 °C selon une vitesse d'au moins 10 °C/s au moyen d'une source de rayonnement UHF.

5. Procédé selon la revendication 4, **caractérisé en ce que** le procédé de la dispersion (homogénéisation) se poursuit jusqu'à ce que les particules de graisse atteignent une taille de plus de 0,5 mkm.

6. Ligne de fabrication permettant de générer des produits à base de lait caillé, qui comprend une installation de traitement du lait avec un dispositif d'homogénéisation, une installation de pasteurisation, une installation d'ajout direct de ferment lactique, une installation de soutirage avec installation d'étanchéification, une chambre d'étuvage, une chambre de refroidissement, ces installations étant disposées de façon synchronisée avec le déroulement technologique et étant reliées entre elles, **caractérisée en ce que** l'installation de soutirage avec installation d'étanchéification est disposée avant l'installation d'ajout de ferment lactique, l'installation d'ajout de ferment lactique avec l'installation de désétanchéification et l'installation d'étanchéification finale qui est appliquée après l'installation d'ajout de ferment lactique, est complétée avec des sources de rayonnement UV qui sont disposées le long de la limite de la zone d'ajout des ferments lactiques.

7. Ligne de fabrication selon la revendication 6, **caractérisée en ce qu'**elle est munie d'un dispositif agitateur du lait avec un ferment acide, le dispositif agitateur étant exécuté en tant qu'agitateur mécanique pour bande transporteuse et étant disposé entre l'installation d'ajout de ferment lactique et la chambre d'étuvage.

8. Ligne de fabrication selon la revendication 6, **caractérisée en ce que** l'installation transporteuse est exécutée après le dispositif de soutirage sous la forme d'une bande transporteuse.

9. Installation de traitement du lait qui comprend un réservoir de recirculation, un dispositif de dispersion et un dispositif d'homogénéisation, un dispositif de soutirage et une installation d'étanchéification, ces installations étant disposées selon la succession du déroulement technique des procédés et étant reliées ensemble par des conduites, la sortie du dispositif de dispersion est reliée à l'entrée du réservoir de recirculation et la sortie du réservoir de recirculation est reliée à l'entrée du dispositif de dispersion, suite à quoi est formé un circuit fermé permettant une circulation multiple du lait par le dispositif de dispersion, **caractérisée en ce qu'**elle est en outre équipée d'un réservoir supplémentaire d'une solution aqueuse ou d'une suspension du dérivé d'acide polyphosphorique répondant à la formule générale suivante : HO-[PO₃X]ₙ-PO₃X₂, dans laquelle X représente des ions du sodium, du potassium, du calcium, du magnésium, de l'hydrogène ou de l'ammonium, 30 ≥ n ≥1, et la formule présente une valeur de 0,4-0,7 g/l, où ce réservoir est relié à l'entrée de l'installation de dispersion et est complété par un réservoir autonome dans lequel le lait est mis à reposer à une température de 68-72 °C, où en outre l'entrée du réservoir autonome est reliée à la sortie de l'installation de dispersion et la sortie est reliée à l'installation de soutirage et au refroidisseur, qui fait refroidir le lait dans une plage de température de 12 à 37 °C, et qui est placée après le dispositif de soutirage, où en outre l'installation de traitement du lait est équipée d'un conservateur de lait dans lequel la température du lait est maintenue à 12 à 37 °C, et d'un appareil en tunnel pour une pasteurisation secondaire avec la bande transporteuse, qui est équipée d'une source de rayonnement UHF disposée le long de la bande transporteuse et garantit une vitesse d'augmentation de la température du lait d'au moins 10 °C/s jusqu'à une température de 68-72 °C.

10. Installation selon la revendication 9, **caractérisée en ce que** le réservoir autonome est exécuté en tant qu'appareil de brassage avec chemise d'eau qui est raccordée au courant d'agent réfrigérant.

11. Installation selon la revendication 9, **caractérisée en ce que** le réservoir autonome est exécuté sous la forme d'un tunnel de transport et de refroidissement hydrodynamique continu.
